# EUROPEAN PATENT SPECIFICATION

(11) **EP 2 707 172 B1**
(45) Date of publication and mention of the grant of the patent: **10.07.2019**
(21) Application number: 12706268.5
(22) Date of filing: 01.03.2012
(51) Int. Cl.: B23K 26/06, B23K 26/14, B23K 26/34

(54) **PROCESS FOR CLADDING A SUBSTRATE**
VERFAHREN ZUR BESCHICHTUNG EINES SUBSTRATEN
PROCÉDÉ DE REVÊTEMENT D'UN SUBSTRAT

(30) Priority: 10.05.2011 EP 11165427
(43) Date of publication of application: 19.03.2014
(73) Proprietor: Sulzer Turbo Services Venlo B.V., 5943 AD Lomm (NL)
(72) Inventor: MATTHEIJ, Jozef H.G., NL-6074 AH Melick (NL)
(74) Representative: Intellectual Property Services GmbH
(86) International application number: PCT/EP2012/053542
(87) International publication number: WO 2012/152461

(56) References cited:
- EP-A1- 0 558 870
- WO-A1-2007/002017
- US-A- 5 453 329

## Description

The present invention relates to a process for cladding a substrate. Embedding particles in substrate surfaces is of utility, for example, in producing abrasive coatings on metallic surfaces such as those of turbines used in aircraft engines or industrial gas turbines. These abrasive coatings usually contain hard grinding or cutting particles in order to allow the tips of the turbine blades to cut their way into the abradable ceramic seals of the surrounding housing during their first hours of operation. As a result of such abrasion, the clearance between tips of the turbine blades and the housing is kept as small as possible. This tight clearance has the benefit of minimizing the bypass flow of air and other gases past the tips of the blade, which then minimizes energy and efficiency losses of the turbine due to such losses of high energy gases. Typical abrasive hard particles are composed of cubic boronitride (cBN) or silicon carbide (SiC). These hard particles are often coated in order to improve their oxidative stability, thermodynamic stability when in contact with particular alloys, or to improve their bonding to the substrate.

Processes for the preparation of such substrate surfaces in which particles are embedded are known. For example, US 5,935,407 discloses methods to embed the particles in a metallic matrix by means of galvanic techniques. The disclosed method is quite complex and laborious however and requires several types of special equipment and steps for first depositing a base layer by low pressure plasma spray, next tack electroplating to anchor the particles to the base layer, followed by high frequency reverse-pulse entrapment electroplating to embed the particles in a metal matrix, and finally a high temperature heat treatment to diffuse part of the particle composition into the metal matrix in order to create a dense matrix. Furthermore the method of US '407 requires the use of relatively large volumes of special and often toxic chemical reagents such as surfactants and transition metal salt plating solutions. In addition, it is necessary to recycle and/or dispose of the solutions after use. It would be desirable to have other simpler methods for embedding particles which do not require so many different types of techniques, equipment and chemical reagents, particularly solutions.

An alternative method of embedding particles is known from US patent application US 2007/009011 A1, which discloses that SiC particles are first secured to a carrier metallic plate by an epoxy adhesive, then the particles are coated with a metallic matrix in a physical vapor deposition (PVD) process, and the carrier plate is next inverted over a substrate and the metallic matrix is brazed to the substrate such that the "feet" of the particles are embedded in the brazed metallic matrix layer. Finally the carrier plate is removed by bending, peeling or grinding. However this method also requires several different types of processes and the use of epoxy adhesives and carrier plates which are not easily recyclable. Furthermore the surface of the substrate and its adhering particles may be damaged in the process of removing the carrier plate.

It is noted that laser cladding or welding of powders to a substrate is also known, and, for example, disclosed in US 5,245,155. In such methods a portion of the surface of a substrate is melted by a laser beam and a powder filler is added thru the path of the laser beam into the molten surface material. The melting of the powder by the laser beam and in the molten surface material gives a weld bead of substantially the filler, which then solidifies as the laser moves away to form a weld deposit of substantially the filler on the surface of the substrate. Such methods are not applicable however to forming abrasive surfaces. This is because the abrasive function depends on the random distribution of fine abrasive particles having sharp faceted cutting edges. These particle properties and abrasive function are lacking in surfaces prepared by the method of US '155 because all of the particles have been melted and agglomerated together and thus their sharp features have been lost. It is noted that a similar process with similar disadvantages is disclosed by DE 41 29 239 A1.

US 5,453,329 attempts to overcome this aspect in its disclosed laser cladding method for embedding abrasive particles in a substrate. In this method a laser is focused on a superalloy substrate to form a small pool of superheated molten substrate material. A matrix blend of fine metal powder and fine abrasive particulates coated with a non-reactive encapsulating thermal insulating layer is injected into the irradiated melt pool by means of a powder feeder. Irradiation of the melt pool and dispersed matrix blend is continued until the metal powder and at least the surface of the insulating layer melt and mix with the superalloy in the pool thereby forming an alloy mix. The alloy mix is then finally solidified by ceasing irradiation of the melt pool.

This laser cladding method of US '329 is however very difficult to control and has several disadvantages. As disclosed in Table 1 of US '329, many abrasive particles have melting temperatures many hundreds of degrees lower than the superheated melt pool temperature generated by the laser, which is in excess of 3,000 °C. As disclosed in US '329, the superheating of the particles generated by the laser damages the abrasive particles and their abrasive effects thru melting and agglomeration processes. These processes change the distribution and morphology from small, uniformly distributed particles with many sharp faceted cutting edges to large, randomly agglomerated masses having rounded features. Such melting and agglomeration processes reduce the abrasive properties of the resulting laser-clad surface. The direct impingement of the laser on the particles directly heats the particles and may damage them or change their properties. For example, cutting and sawing of abrasive materials such as metal carbides and oxides by laser ablation is a well-known technique for microstructuring such materials.

The method of US '329 attempts to limit such damage during laser cladding by coating the particles with a thin layer of a coating material having a melting point greater than about 1,000 °C. It is then necessary to maintain a delicate balance between irradiating the melt pool containing the coated particles long enough to melt part of coating so that it mixes with the molten superalloy in the melt pool forming an alloy mix prior to solidification and not irradiating the melt pool so long that the particles underlying the coating are also melted and/or damaged. This balance is very difficult to achieve because the various particles in the feed stream and melt pool will be shielded from laser damage to widely different extents. For example, particles in the powder stream regions closest to the interface where the laser and powder streams first intersect will be relatively unshielded towards laser damage. In contrast particles on the side of the powder stream opposite this interface will only be exposed to laser energy that is significantly attenuated by the intervening fine metal powder and coated particulates. Also the particles in the melt pool will be submerged to various extents and in various orientations. Thus some particles will be relatively shielded from the laser by the intervening melt pool and others will be shielded to a lesser extent or not at all. This balance is of course even more difficult to achieve and maintain in the continuous operation of US '329 as the impinging laser beam, powder feed and melt pool travels across the substrate surface at a relatively high speed, and powder is also continuously being feed to the moving melt pool at a relatively high rate.

Another disadvantage of the process of US '329 is that it is disclosed that the surface becomes quite inhomogeneous in that thorough mixing of the melted coating in the melt pool does not occur and localized regions enriched to various extents with the coating material are formed. These regions may have very different and relatively poorer properties from those of the substrate, and the resulting inhomogenous nature of the surface may adversely affect its strength, cohesive, and heat and corrosion resistance properties.

Yet a further disadvantage of the process of US '329 is that the coating of the abrasive particles with the necessary thermal insulating layer adds additional costs for raw materials and an additional processing step. Furthermore coating the particles may adversely change their desired sharp geometric features and other properties. Yet another additional raw material required by the process of US ' 329 is the fine metal powder component of its matrix blend. In conclusion, it would be desirable to have a cladding process that would be easier to control than that of US '329, and without its resulting particle damage and requirement for particle coatings and fine metal powder.

Another laser cladding method for embedding abrasive particles in a substrate is disclosed by US 5,997, 248. The disclosed method is however only applicable to silicon carbide granules covered with at least a layer of aluminum nitride. The disclosed only example actually concerns silicon carbide particles covered with layers of both aluminum nitride and also NiCrAI cladding alloy. In the disclosed method, a laser beam generates a laser light spot on a blade tip surface to create a melt pool, and the clad SiC particles are gravity fed to a region adjacent to the spot of laser light. No motivation is provided for feeding the particles this way, and it is not clear whether the particles are actually protected from damage by the laser in this method or not. For example, it is stated that the laser at least partially melts the cladding alloy into the tip alloy. This implies then that the method of US '248 is similar to that of US '329 in that special coatings for the particles are required and the laser light directly impinges on the particles so as to at least partially melt them.

Even if one were to try to use the method of US '248 in a manner that would prevent the laser from impinging directly on the particles and damaging them, such a process would be extremely difficult to control. For example, the melt pool is typically not so large, e.g. about 2 mm in diameter, and certainly not very large relative to the laser spot. Therefore the molten "comet tail" of the melt pool adjacent to the spot of laser light is relatively quite small in area and volume. In addition, the cooling rates inherent to laser cladding are known to be extremely high, e.g. on the order of 10⁶ °C/s. The shallower non-irradiated comet tail of the melt pool will cool even faster so that one would have a time period of only about 1 ms or less to try to inject the particles into the rapidly cooling comet tail. Further complicating these particle feeding issues of the extremely small area and short time for feeding is the fact that the melt pool and its comet tail, the laser spot and particle feed are traveling at high speeds across the surface of the substrate in the method of US '248. In conclusion, it would be desirable to have a cladding process that would be easier to control than that of US '248, and without its resulting particle damage and requirement for special particle compositions and coatings.

WO 2007002017 A1 discloses a process for cladding a substrate comprising the steps of: directing an energy beam onto an area of a surface of the substrate to create a pool of molten material at the area of the surface, directing a stream of particles toward the pool of molten material so that at least a first portion of the particles enters the pool of molten material, allowing the pool of molten material to cool and solidify thus trapping a second portion of the particles in the solidified pool of material (8) to form trapped particles. The energy beam is directed at the area of the surface in the form of an energy pulse and the stream of particles is in the form of a pulse of particles.

EP 0558870 A1 discloses an apparatus comprising: an energy beam source for generating an energy beam, an energy pulsing unit for generating an energy pulse, an energy beam directing unit for directing the energy beam onto an area of a surface of a substrate, a particle stream source for generating a stream of particles, a particle stream directing unit for directing the stream of particles onto the area of the surface of the substrate, a particle stream pulsing unit for generating a pulse of particles, wherein the apparatus has a pulse timing and sequencing control unit.

US 5453329 A discloses a clad substrate obtained by a method of applying abrasive materials to a substrate. The method includes the steps of forming a relatively small pool of superheated molten metal at the surface of the metal substrate by creating an interaction area on the substrate with a localized high energy source. A powder system is injected into the pool. The powder system comprises metal matrix powder and abrasive powder. The abrasive powder includes abrasive particles having an encapsulating thermal insulating layer for preventing the abrasive particles from being melted by the molten metal in the pool. The substrate is then moved relative to the energy source, thereby allowing the pool to resolidify.

### SUMMARY OF THE INVENTION

Starting from this state of the art, it is an object of the invention to provide a process for cladding a substrate that does not suffer from the previous mentioned deficiencies, particularly a lack of adequate protection of the particles from damage by impinging laser light, the lack of ability to process particles in uncoated form or in a variety of compositions, and the lack of a robust and easily controllable process for laser cladding with thermally sensitive particles. Further objects of the invention include providing an apparatus suitable for use in said process, a clad substrate obtainable by said process, and the use of said process or apparatus in cladding turbine components.

According to the invention, these objects are achieved by a process for cladding a substrate, said process comprising the steps of: directing an energy beam onto an area of a surface of a substrate to create a pool of molten material at the area of the surface, directing a stream of particles toward the pool of molten material so that at least a first portion of the particles enters the pool of molten material, allowing the pool of molten material to cool and solidify thus trapping a second portion of the particles in the solidified pool of material to form trapped particles, wherein the energy beam directed at the area of the surface is in the form of a energy pulse and the stream of particles is in the form of a pulse of particles, and wherein the energy pulse is ended or the energy beam is redirected or the energy beam is reduced in power before the particles enter the path of the energy beam and before the particles enter the pool of molten material, and wherein the ending of the energy pulse or the redirection of the energy beam, or the reduction in power of the energy beam is embodied such that a substantial melting, fusing together or change in shape of the particles by the energy beam is avoided.

The present invention achieves these objects and provides a solution to this problem by means of an energy beam directed at the area of the surface in the form of a energy pulse and a stream of particles in the form of a pulse of particles, wherein the energy pulse is ended, the energy beam is redirected, or the energy beam is reduced in power before the particles enter the path of the energy beam and before the particles enter the pool of molten material, and wherein the ending of the energy pulse, the redirection of the energy beam, or the reduction in power of the energy beam is embodied such that a substantially melting, fusing together or change in shape of the particles by the energy beam is avoided. As a result, temperature sensitive particles will not be damaged by the energy beam during the cladding process, and they will then be trapped by the solidifying melt pool in a relatively undamaged state. Therefore desirable particle properties such as the many sharp faceted cutting edges of abrasive particles will not be destroyed during the cladding process, and the particles will also be uniformly and discretely distributed over the resulting clad surface as many small trapped particles. The attainment of this desired distribution and morphology of particles by the method of the present invention allows then the ready and robust preparation of highly abrasive surfaces.

These results are then surprisingly achieved without the need for any special coatings of the abrasive particles used in the laser cladding process. This is quite surprising in that both US '248 and US '329 disclose that their coatings of the abrasive particle are essential aspects of their claimed inventions. In particular, US '329 emphasizes that its special thermal barrier particle coatings are responsible for protecting its abrasive particles from the laser during processing and that its special thermal barrier coatings are what allows its abrasive particles to be satisfactorily laser deposited.

Furthermore these results are surprisingly also achieved without the need to attempt to have a tightly-controlled partial melting of the particles occur in the cladding process, in which only the thin surface coating of the particles - but not the underlying particle - melts.

In a preferred embodiment, the process comprises the additional subsequent step, wherein the energy beam is directed onto a substantially different area of the surface and the earlier steps are repeated on the substantially different area. Repeating the steps on substantially different areas allows a larger area of the surface of a substrate to be clad in several repeated steps and without damage to the already clad area(s).

According to another preferred embodiment, the process comprises the additional step in which, after the trapped particles are formed, the surface of the substrate is cleaned to remove a third portion of untrapped particles on the surface. Likewise in a preferred embodiment of the apparatus, the apparatus additionally comprises a surface cleaning device for removing particles that are untrapped particles. Removing untrapped particles ensures that the surface is clean so that the cladding of other areas of the surface and other processing may be carried out unimpeded by particle contaminants on the surface. For example, untrapped particles that are not removed may contaminate the preparation of nearby melt pools. Furthermore the particles are themselves a valuable raw material, and it may therefore be economically interesting to recover and reuse them. Therefore in a particularly preferred embodiment, the removed particles are used to prepare a further pulse of particles.

According to another preferred embodiment of the process, the pulse of particles is set to a duration of from 1 to 100 ms, preferably set to a duration of from 5 to 20 ms, most preferably set to a duration of from 20 to 30 ms. Likewise in another preferred embodiment of the apparatus, the apparatus additionally comprises a particle pulse duration controlling unit for generating a pulse of particles of presettable duration. Only the particles that arrive before the melt pool is solidified may become trapped particles. Therefore longer durations of the particle pulse will generate a greater quantity of ineffective untrapped particles that will preferably then need to be removed and optionally recovered or recycled. For this reason, in a typical process only about the first 30 ms of the pulse of particles are effective, and later arriving particles will not be incorporated at the surface by becoming trapped by the solidifying melt pool.

In yet another preferred embodiment of the process, the stream of particles is set to a velocity of from 5 to 50 m/s, preferably from 10 to 30 m/s, and most preferably of about 20 m/s. Likewise in yet another preferred embodiment of the apparatus, the apparatus additionally comprises a particle stream velocity controlling unit for generating a stream of particles of presettable velocity. Having a velocity of at least about 5 m/s helps make the process easier to control and robust in that the particles must arrive at the melt pool within the very short period of time before it solidifies. Therefore a higher velocity also enables also a higher density of particles in the melt pool to be achieved. Furthermore a greater velocity and thus kinetic energy of the particles helps them to penetrate into the melt pool and minimizes blockage problems in the equipment used to generate, accelerate and direct the particle stream. On the other hand, too high a velocity may become counterproductive. The stream of particles will typically be propelled by a jet of gas, and using higher gas velocities to generate higher particle velocities will tend to increase the rate of cooling of the melt pool significantly so that the time window available for particles to enter the melt pool is reduced. Furthermore very high gas velocities may even act to blow away the melt pool from the surface. In addition particles with a high kinetic energy may be lost and wasted in the process due their ricocheting or bouncing out of the pool of molten material.

In still another preferred embodiment of the process, the stream of particles is directed at an angle of from 30 to 60 degrees, preferably 40 to 50 degrees, relative to the plane of the area of the surface. Typically the surface of the substrate to be clad will be kept substantially horizontal in its orientation so that the generated melt pool does not flow away and so that the particles do not roll away when they arrive at the surface. Therefore having an angle of at least about 30 degrees relative to the plane of the surface, which will typically be substantially horizontal, will make it easier to direct the stream of particles towards the melt pool in that the cross-sectional area of the melt pool perpendicular to the direction of the incoming particle stream will be larger for larger angles. However the energy beam source will typically be located above the substrate, and many conventional energy beam sources such as electron beam sources are designed to direct their beams downward in a vertical path substantially perpendicular to the plane of the underlying area of the surface to be irradiated by the energy beam. Therefore directing the stream of particles at much higher angles, e.g. closer to the 90 degree orientation will also tend to increase the extent of overlap between the paths of the energy beam and the stream of particles. Furthermore the first overlap between the paths of the energy beam and stream of particles will occur at greater distances from the melt pool as the angle of incidence of the stream of particles approaches that of the energy beam. In such cases, the energy pulse will needed to be ended or the energy beam diverted or reduced in power even earlier while the particles are still even further away from the melt pool on the substrate. This then makes the process more difficult to carry out and control in that discontinuing the irradiation of the melt pool while the particles are further away will further reduce the relatively short time period available for particles to enter the melt pool.

In still yet another preferred embodiment of the process, the particles are coated or uncoated particles comprising silicon carbide, cubic boron nitride, or diamond. These particle compositions are particularly useful for preparing abrasive surfaces. In addition, these particles are quite heat sensitive and susceptible to being damaged by the energy beam. Therefore these particles benefit greatly from the process of the invention.

In a further preferred embodiment of the process, the energy beam is a laser beam, electron beam, plasma stream, or electric arc. Likewise in a further preferred embodiment of the apparatus, the energy beam source is a laser beam, electron beam, plasma stream, or electric arc source. Such energy beams are readily available with the necessary power to generate a pool of molten material on typical substrate surfaces. These energy beams are also readily controllable in terms of generating pulses of defined duration and in terms of deflecting or ending them or reducing their power. Furthermore these energy beams have the necessary rapid response times preferred for the process. In a particularly preferred process, the energy beam is a laser beam. Similarly in a particularly preferred apparatus, the energy beam source is a laser beam source. Laser beams are particularly easy to control and direct in the process of the invention.

One skilled in the art will understand that the combination of the subject matters of the various embodiments of the invention is possible without limitation in the invention. By way of example, according to a particularly preferred embodiment of the process, the particles are coated or uncoated particles comprising silicon carbide, cubic boron nitride, or diamond and the energy beam is a laser beam, electron beam, plasma stream, or electric arc. By way of another example, according to another particularly preferred embodiment, the process comprises the additional steps wherein the energy beam is directed onto a substantially different area of the surface and the earlier steps are repeated on the substantially different area, and wherein after the trapped particles are formed, the surface of the substrate is cleaned to remove a third portion of particles on the surface that are not trapped particles. By way of yet another example, according to another particularly preferred embodiment, a clad turbine component is obtainable by the process and has a first metallic layer, a second metallic layer comprising a metallic matrix and trapped particles dispersed therein, wherein the trapped particles are coated or uncoated particles comprising silicon carbide, cubic boron nitride, or diamond, and wherein the metallic matrix is substantially free of phases of mixed compositions intermediate between the composition of the metallic matrix and the composition of the trapped particles.

### BRIEF DESCRIPTION OF THE DRAWINGS

The invention will be explained in more detail hereinafter with reference to various embodiments of the invention as well as to the drawings. The schematic drawings show:
- Fig. 1: shows a schematic view of an example of an apparatus for carrying out the invention prior to the process of cladding a substrate.
- Fig. 2: shows a schematic view of the apparatus of Fig. 1 during the process of cladding a substrate, in which a pool of molten material has been created by an energy beam and a stream of particles has been directed toward said pool.
- Fig. 3: shows a schematic view of the apparatus of Fig. 1 during the process of cladding a substrate, in which a first portion of the particles enters the pool of molten material and the energy pulse of the energy beam has been ended before the particles enter the path of the energy beam and before the particles enter said pool.
- Fig. 4: shows a schematic view of the apparatus of Fig. 1 during the process of cladding a substrate, in which a second portion of the particles is trapped in the solidified pool of material and the pulse of particles has been ended.
- Fig. 5: shows a schematic view of an example of a powder-fed particle acceleration unit.
- Fig. 6: shows a schematic view of a substrate clad using a process according to Fig. 1 to FIG. 4
- Fig. 7: shows a photomicrograph of a specific substrate clad using a process according to Fig. 1 to FIG. 4

### DETAILED DESCRIPTION OF THE INVENTION

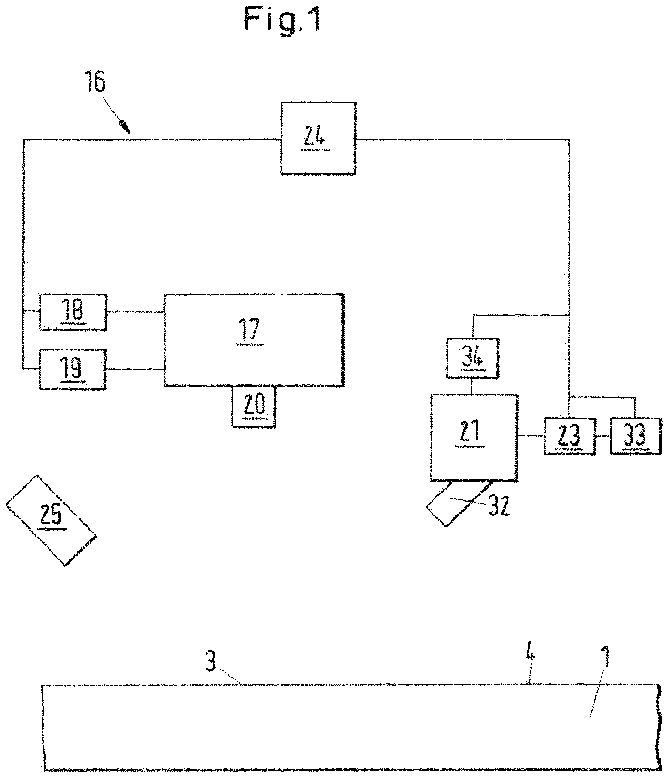

FIGS. 1 to 4 show different stages of the process according to the invention. FIG. 1 shows a schematic view of an example of an apparatus for carrying out the invention, which as a whole is labeled with reference number 16. In FIG. 1 the apparatus is shown prior to the process of cladding a substrate (1). The substrate (1) is not specifically limited as to form, shape or composition. The substrate (1) may be made of one or more layers and may optionally be coated. Preferably, the substrate is a turbine component, and and may be metallic, a metal alloy or a metallic superalloy.

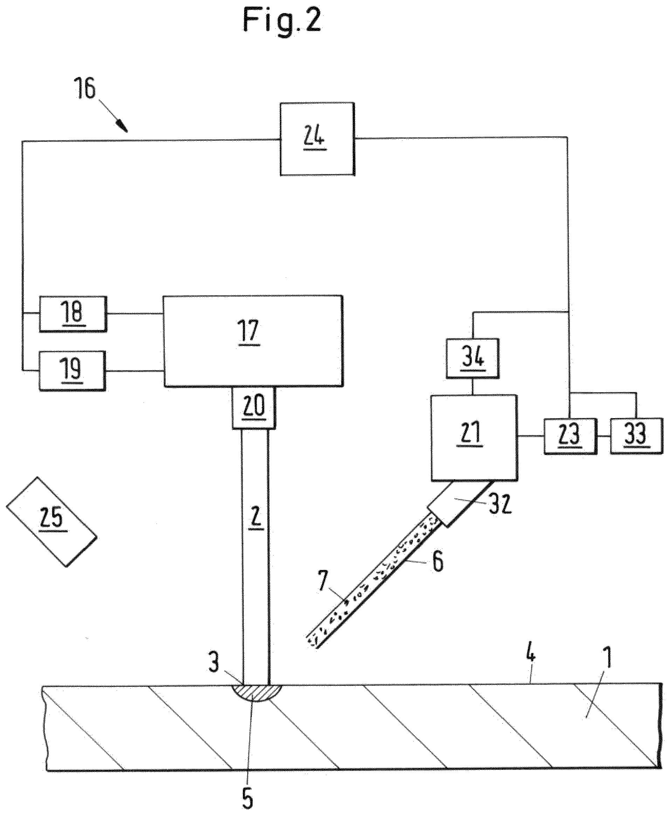

The apparatus (16) comprises an energy beam source (17) for generating an energy beam (2) (FIG. 2). The energy beam source (17) and energy beam (2) may be conventional ones, so long as they have sufficient power to form a pool of molten material (5) at an area (3) of a surface (4) of a substrate (1). In one embodiment, the energy beam source (17) is a laser beam source, electron beam source, plasma stream source, or electric arc source and the energy beam (2) is a laser beam, electron beam, plasma stream, or electric arc. Such energy beam sources (17) are readily available with the necessary power, and they are relatively intense and focused so as to be capable of creating the pool of molten material (5) without excessively heating the rest of the substrate (1). It will be understood by one skilled in the art that other alternative energy beam sources may be used as long as they are capable of creating the pool of molten material (5) and can be controlled and synchronized with respect to the subsequent injection of powder particles into the pool of molten material (5). For example, in another embodiment the energy beam source (17) is an oxy-acetylene burner and the energy beam (2) is an oxy-acetylene flame. However the use of an oxy-acetylene burner will require care to avoid excessive heating of the substrate and require a responsive control system to synchronize the oxy-acetylene flame with the injection of powder particles.

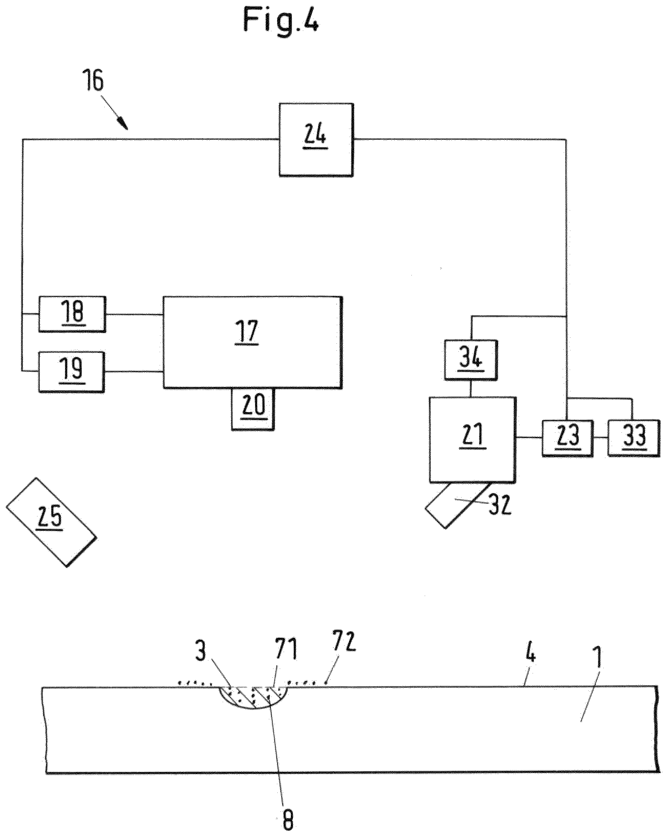

Excessive heating of the rest of the substrate (1) by the energy beam (2) may damage it or may cause the pool of molten material (5) to require excessively long times to cool and solidify to form a solidified pool of material (8) (FIG. 4). Therefore in the embodiment according to FIG. 1, the apparatus (16) comprises an energy beam power controlling unit (18) for controlling the power of the energy beam (2), an energy pulsing unit (19) for generating an energy pulse, and an energy beam directing unit (20) for directing the energy beam (2) onto the area (3) of the surface (4) of the substrate (1).

The energy beam power controlling unit (18) may be any unit suitable for supplying the power requirements of the previously discussed energy beam source (17). Therefore conventional power supply units such as AC, DC and fixed or portable power supplies may be used depending on the requirements of the energy beam source (17). It will be understood that the power may vary over a very large range in order to prepare the pool of molten material (5) with a large range of potential diameters and for a variety of potential substrates (1). In general, the use of a higher power will permit the creation of a larger diameter pool. A typical pool diameter in practice will be on the order of about 1 to about 4 mm, and thus a typical minimum power will be on the order of about 500 W. Ranges of power will typically vary in practice from about 1 kW to about 4 kW, although even higher powers may be used. Preferred powers for industrial welding lasers are about 1 kW or greater, more preferably about 1.5 to about 4 kW. Higher powers will allow larger areas (3) of the surface (4) of the substrate (1) to be processed; however, caution will be required in order to avoid excessive heating and/or damage of the substrate (1).

The energy pulsing unit (19) may be any controllable unit suitable for stopping, reducing in power, moving, or shutting off the energy in order to create the energy beam (2) in the form of an energy pulse. The energy pulsing unit (19) allows pulses of the energy beam (2) to be generated so that the energy beam (2) and its creation of the pool of molten material (5) may be readily synchronized together with the stream (6) of particles (7) in the various steps of the cladding process of the invention. In one embodiment, the energy pulsing unit (19) is a unit for turning on and off the power of the energy beam (2). Such switching devices are readily available and easily controllable. In another embodiment, the energy pulsing unit (19) comprises a shutter or attenuator mechanism for blocking or attenuating the energy beam (2). In a preferred embodiment, the energy pulsing unit (19) and the energy beam power controlling unit (18) may preferably be integrated together into a single unit that has the function of both controlling the power and creating the energy pulse (19).

The energy beam directing unit (20) will be any controllable unit suitable for directing the energy beam (2) at different areas (3) of a surface (4) of the substrate(1). This unit (20) allows the energy beam (2) to create pools of molten material (5) at various areas (3) of the surface (4). In a preferred embodiment, the energy beam directing unit (20) is a stage for the energy beam source (17), a gun, or a beam deflector. In another preferred embodiment, the energy beam directing unit (20) comprises a mirror for directing a laser beam. Furthermore the energy beam directing unit (20) may protect the particles (7) from being damaged by the energy beam (2) by redirecting the energy beam (2) before the particles (7) enter the path of the energy beam (2) or the pool of molten material (5) created by the energy beam (2). The energy beam directing unit (20) may also be used advantageously to create an energy pulse by first directing the energy beam (2) at an area (3) of the surface (4) and then subsequently directing the energy beam (2) away from the area (3) of the surface (4). In a preferred embodiment, the energy beam directing unit (20) and the energy pulsing unit (19) may preferably be integrated together into a single unit that has the function of both directing the energy beam (2) and creating the energy pulse (19).

A wide variety of angles of incidence of the energy beam (2) relative to the plane (15) of the area (3) of the surface may be suitably used. Typical angles will vary within about 45 degrees of a line orthogonal to the plane (15), typically within about 20 degrees in the case of a laser beam.

For the sake of clarity only one stream (6) of particles (7) and only one particle stream source (21) etc. are mentioned in the following description, but it is envisioned that two or more streams (6) or sources (21) etc. may be used in the invention.

As exemplified by the embodiment shown in FIG. 1, the apparatus (16) also comprises a particle stream source (21) for generating a stream (6) of particles (7), a particle stream directing unit (22) for directing the stream (6) of particles (7) onto the area (3) of the surface (4) of the substrate (1), and a particle stream pulsing unit (23) for generating a pulse of particles (7). The particle stream source (21) supplies particles (7) to the process, and particularly for generating a pulse of particles (7), and it may comprise any suitable source of a stream (6) of particles (7), such as a conventional powder feeder like a gravity-controlled particle hopper or a vibration powder feeder.

Alternatively, the particles (7) may be conveyed by other suitable conventional means such as mechanically, pneumatically or by pumping based on pressure differences. The particle stream source (21) has the function of generating a stream (6) of particles (7), and the particle stream directing unit (22) and the particle stream pulsing unit (23) may each optionally be directly incorporated into the particle stream source (21) as integrated parts. It will be understood that the particle stream source (21) is required to be embodied such that when a pulse of particles (7) is triggered that a sufficiently dense stream (6) of particles (7) having a sufficient velocity is created rapidly enough so that at least a first portion of the particles (7) enters the pool of molten material (5). If the density and/or velocity of the stream (6) is insufficient, the pool (5) will solidify before a useful number of particles (7) enters the pool of molten material (5).

The particle stream directing unit (22) may be any unit suitable for directing the flow of a stream (6) of particles (7). This unit has the function of directing the stream (6) of particles (7) toward the pool of molten material (5) at the area (3), or optionally a substantially different area, of the surface (4) of the substrate (1). For example, it may be in the form of a gun or a nozzle, or it may simply be in the form of a pipe extending from the particle stream source (21). In an alternative embodiment, rather than directing the flow of the stream (6) of particles (7) from the particle stream source, the particle stream directing unit (22) may be in the form of a stage that varies and controls the orientation of the particle stream source (21) relative to the area (3) of the surface (4) of the substrate (1). It will be understood that the internal surface of the particle stream directing unit (22) will preferably be smooth so as to minimize the hold-up of particles in the unit and prevent clogging of the unit.

The particle stream pulsing unit (23) for generating a pulse of particles (7) may be any unit suitable for generating a pulse of particles (7). By supplying the particles (7) in the process of the invention in the form of a pulse of particles (7) the timing and synchronization of the entering of the particles (7) in the path of the energy beam (2) and in the pool of molten material (5) relative to the ending of the energy pulse or the redirection of the energy beam (2) or the reduction in power of the energy beam (2) may then be readily accomplished so as to avoid damage to the particles (7) by the energy beam (2). As discussed earlier, it is important that the density and velocity of the stream (6) of particles (7) in the pulse (1) of particles (7) are sufficient so that at least a first portion of the particles (7) enters the pool of molten material (5). Ending of the pulse of particles (7) after a first portion of the particles (7) enters the pool of molten material (5) allows the energy beam (2) to be directed onto a substantially different area of the surface (4) in order to prepare another pool of molten material (5). In addition using a pulse of particles (7) that is as short as possible minimizes the waste of particles in the process resulting from particles (7) arriving at the pool (5) after it has already solidified. Preferably the unit (23) will comprise a controllable upstream gas or air valve for use in generating the pulse because such controllable valves are readily available with the required rapid response times and controllability. Furthermore such valves may be electronically controllable and thus readily interfaced and synchronized with the other units of the apparatus (16), such as a pulse timing and sequencing control unit (24).

As exemplified by the specific embodiment shown in FIG. 1, the apparatus (16) may also have a particle pulse duration controlling unit (33) for generating a pulse of particles (7) of presettable duration. Generating pulses of presettable duration may enhance or simplify the control of the timing of the various steps in the process, and limiting the duration to the minimum length required such that all particles (7) in the pulse enter the pool of molten material (5) minimizes unnecessarily waste of the particulate raw material in the process.

As mentioned earlier, it is envisioned that two or more streams (6) of particles (7) may be used in the process of the invention and thus two or more particle stream sources (21) etc. may be used in the apparatus of the invention. In one embodiment of the process, there are two or more streams (6) of particles (7) operating simultaneously, preferably with the streams (6) opposed to one another so that the pool of molten material (5) is kept relatively calm in an overall balanced field of streams (6). In one embodiment of the process there are two or more particle stream sources (21) and their associated units operating simultaneously, preferably embodied such that the generated streams (6) of particles (7) are opposed to one another in a manner such that the pool of molten material (5) is kept relatively calm in an overall balanced field of streams (6).

As exemplified by the specific embodiment shown in FIG. 1, the apparatus (16) may also have a particle stream velocity controlling unit (34) for generating a stream (6) of particles (7) of presettable velocity. As discussed earlier, presetting the velocity to certain ranges may enhance or simplify the control of the timing of the various steps in the process, as well as the reproducibility and quality of the resulting clad substrate (1'). For example, the velocity directly influences the achievable density of particles (7) in the pool of molten material (5).

As exemplified by the embodiment shown in FIG. 1, the apparatus (16) also comprises the pulse timing and sequencing control unit (24) embodied such that the energy pulse creates a pool of molten material (5) at the area (3) of the surface (4) of the substrate (1) prior to the arrival of the particles (7) at the area (3) of the surface (4), and the energy pulse is ended, diverted, or reduced in power before the particles (7) enter the path of the energy beam (2) and before the particles (7) enter the pool of molten material (5). This unit allows the cladding process to be carried out without the particles (7) being damaged such that a substantial melting, fusing together or change in shape of the particles (7) by the energy beam (2) is avoided. This unit (24) may function using a variety of means that provide controllable timing sequences. Preferably the timing sequences are controllable by the unit (24) with an accuracy of 1 ms or better. In a preferred embodiment, the unit (24) functions electronically and comprises a programmable logic controller (PLC) and/or a personal computer (PC).

As shown in FIG. 2, the process for cladding a substrate of the present invention comprises the step of directing the energy beam (2) onto the area (3) of the surface (4) of the substrate (1) to create the pool of molten material (5) at the area (3) of the surface (4). The substrate (1) to be clad is not specifically limited and, for example, may be a metal or metal alloy or super alloy, optionally coated with a single or multiple metallic coatings. The substrate (1) may comprise part of a variety of suitable articles such as a turbine or a turbine component.

As discussed earlier, a typically useful diameter for the pool of molten material (5) will be on the order of about 1 to about 4 mm, however larger diameters may be used in order to more rapidly process larger areas of the surface (4). Typical diameters may conveniently vary between about 0.1 and about 12 mm, preferably between about 0.5 and about 4 mm, and more preferably between about 1.5 and about 3 mm. The pool of molten material (5) will preferably be large enough such that a substantial number of particles (7) may enter it and deep enough so that the particles (7) may be substantially submerged in the pool. Very large pools of molten material (5) may take a long time to cool and solidify however. Long cooling times may disadvantageously expose the particles (7) for long periods to high temperatures in the pool of molten material (5), which may thus cause melting or other thermal degradation of the particles (7). Typically the pool of molten material (5) will solidify in a period of time of less than about 1 s, preferably less than about 0.8 s, more preferably less than about 0.6 s.

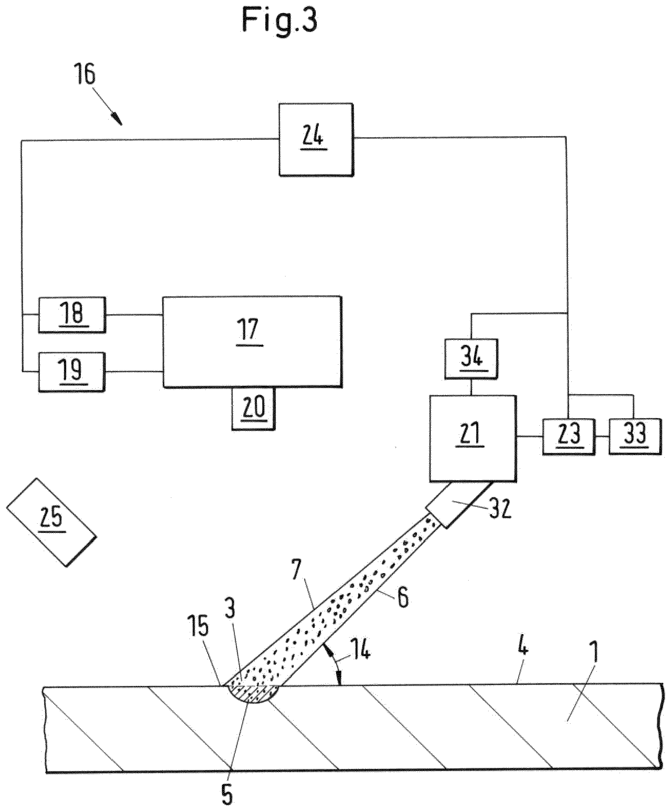

As exemplified by embodiment shown in FIG. 3, the process of the present invention comprises the step of directing a stream (6) of particles (7) toward the pool of molten material (5) so that at least a first portion of the particles (7) enters the pool of molten material (5). As exemplified by the embodiment shown in FIG. 3, the energy pulse of the energy beam (2) has been ended before the particles (7) enter the path of the energy beam (2) and before the particles (7) enter said pool of molten material (5). In alternative embodiments, the energy beam (2) is instead redirected or reduced in power before the particles (7) enter the path of the energy beam (2) and before the particles (7) enter said pool of molten material (5). In these various alternative embodiments, the ending of the energy pulse or redirection or reduction in power of the energy beam (2) are embodied such that a substantial melting, fusing together or change in shape of the particles (7) by the energy beam (2) is avoided.

Any substantial heating of the particles (7) by the energy beam (2) at temperatures approaching, at or above their melting point during the cladding process may lead to an undesirable substantial melting, fusing together or change in shape of the particles (7). Such thermally-damaged particles are then largely wasted in the process as they do not then impart the substrate (1) with the desired properties of the undamaged particles (7), such as abrasiveness.

A variety of methods known in the art may be used to determine or monitor the temperature of the particles (7) during the cladding process. For example, infrared photography and filming may be used to determine the temperature of the particles (7) during their flight in the pulse of particles (7) to the pool of molten material (5). Alternatively the heating and thus temperature of particles may be calculated based on known computational methods based on the various specific parameters of the process including the energy density of the energy beam (2), the exposure time of the particles (7) to the energy beam (2), which may be determined in turn from their velocity and trajectory, and the particle energy absorption, which may be determined in turn, for example, from their size, mass, energy absorption coefficient, and specific heat capacity.

The relative orientation of the stream (6) of particles (7) is not specifically limited. In one embodiment, it is directed relative to the plane (15) of the area (3) of the surface (4) at an angle (14) of from 30 to 60 degrees. In a preferred embodiment it is 40 to 50 degrees. As discussed earlier, the use of said angles will make it easier to direct the stream of particles towards the melt pool in that the cross-sectional area of the melt pool perpendicular to the direction of the incoming particle stream will be larger for larger angles while still minimizing the extent of overlap of the paths of the stream (6) with that of the energy beam (2), which will typically be substantially orthogonal to the plane (15).

The velocity of the stream (6) of particles (7) is not specifically limited. In one embodiment it is set to a velocity of from 5 to 50 m/s. In another embodiment it is preferably from 10 to 30 m/s, and in a third embodiment it is most preferably about 20 m/s. As discussed earlier, such velocity ranges make the process easy to control and robust while allowing higher densities of particles (7) to enter the pool of molten material (5) and to subsequently form trapped particles (71), and without inducing substantial cooling of the pool of molten material (5) or loss of high energy particles by their rebounding or bouncing out of the pool of molten material (5).

The particles (7) may have a variety of sizes suitable for use with the apparatus (16) and in the cladding process. Typical particle sizes may thus vary between about 0.050 and about 2 mm, preferably between about 0.08 and about 0.4 mm, and more preferably between about 0.15 and about 0.40 mm. Typical commercially-available particle sizes such as those for thermal spraying may conveniently be used. The optimum particle size may vary depending on its composition and the desired properties that it should impart to the substrate (1). Larger particle sizes may have the advantage of being more resistant to melting in the pool of molten material (5) due to their greater ability to act as a heat sink. Narrower particle size distributions may favorably improve their processability and the properties of the clad substrate. For example, narrower particle size distributions may increase the homogeneity of the thermal resistance properties of the particles during processing, as well as the resulting surface properties of the clad substrate (1').

The shape of the particles (7) is also not specifically limited. Substantially equiaxed or round shapes have advantages in that they may readily be homogeneously transported and are less subject to hold-up or clogging in the apparatus (16). The optimum particle shape may vary depending on its composition and the desired properties that it should impart to the substrate (1).

The compositions of the particles (7) are also not specifically limited and may comprise inorganic and/or organic materials. Any particle composition that is thermally sensitive and may benefit from a minimized exposure to high temperatures may be used to significant advantage in the process of the present invention. The optimum composition of the particle (7) may vary depending on the desired properties that it should impart to the substrate (1). For the production of abrasive coatings, the particles (7) are preferably coated or uncoated particles comprising silicon carbide, cubic boron nitride, or diamond. In a particularly preferably embodiment, the particles (7) are coated or uncoated particles of silicon carbide, cubic boron nitride, or diamond. These compositions readily provide the particles (7) with the required abrasive and hard properties. The coatings of the coated particles are also not specifically limited and may preferably comprise chromium for improving wear properties. In a preferred embodiment, the coated particles comprise a silicon carbide core and a chromium coating. In addition, the coated particles may optionally be coated with bond coatings or thermally-insulating coatings as in the prior art; however, such coatings are not a requirement.

As exemplified by embodiment shown in FIG. 4, the process of the present invention comprises the step of allowing the pool of molten material (5) to cool and solidify thus trapping a second portion of the particles (7) in the solidified pool of material (8) to form the trapped particles (71). It will be understood that preferably all of the particles (7) entering the pool of molten material (5) will become trapped particles (71). As discussed earlier, some particles with very high kinetic energies may however rebound out of the pool (5) after entering. Such rebounding particles will then not become trapped particles (71), and they will be instead untrapped particles (72). Other sources of untrapped particles (72) are particles (7) that are not properly directed toward the pool of molten material (5) or that have arrived after pool (5) has solidified.

As exemplified by the embodiment shown in FIG.4, the pulse of particles (7) has been ended. As discussed earlier, in one embodiment the pulse of particles is set to a duration of from 1 to 100 ms, preferably set to a duration of from 5 to 20 ms, most preferably set to a duration of from 20 to 30 ms. Shorter duration particle pulses advantageously minimize wastage of particles that would otherwise arrive at the pool of molten material (5) after it has already cooled and solidified.

In one embodiment of the process, after the previously-described steps have been completed, i.e. and the trapped particles (71) have been formed on the area (3), the energy beam (2) is directed onto a substantially different area of the surface (4) and the same steps are then repeated on the substantially different area to form trapped particles (71) there. Repeating the steps on a substantially different area allows larger areas of the substrate (1) to be readily clad.

In another embodiment of the process, after the trapped particles (71) are formed, the surface (4) of the substrate (5) is cleaned to remove a third portion of untrapped particles (72) on the surface. Typical sources of untrapped particles (72) include particles (7) that are misdirected, arrive after the pool of molten material (5) has already solidified, or rebound out of the pool of molten material (5). Removing the untrapped particles (72) allows other areas of the substrate to be clad without interference or hindrance. Therefore, the apparatus for carrying out the process additionally comprises a surface cleaning device (25) for removing the untrapped particles (72). The surface cleaning device (25) may be any device suitable for removing the untrapped particles (72). For example, it may comprise a source of a stream of air and a means for directing the stream of air, such as a nozzle. Typically the area of the surface (4) of the substrate (5) to be cleaned will be exposed to a blast of compressed air.

It will be understood that these two preceding embodiments of the process related to repeating the process to form trapped particles (71) on a substantially different area and removing a third portion of untrapped particles (72) may be combined without limitation in yet further embodiments. For example, the untrapped particles (72) may be removed prior to repeating the cladding process on a substantially different area in order to ensure that this new area is not contaminated with particles that would interfere with the cladding process or degrade the properties of the resulting clad surface.

In still yet a further embodiment of the process, the removed third portion of untrapped particles (72) are used to prepare a further pulse of particles (7). Recycling the particulate raw material improves the efficiency of the raw material usage and thus reduces the overall cost of the process.

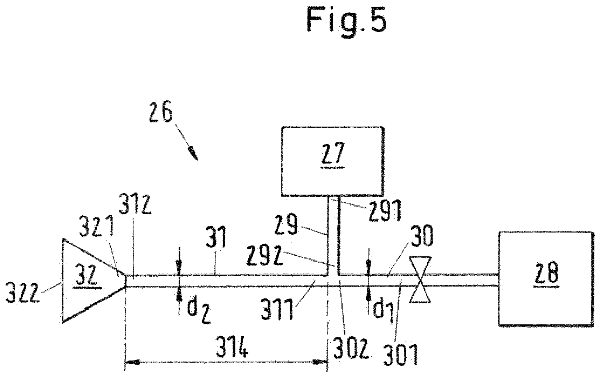

In a preferred embodiment, the particle stream source (21) of the apparatus (16) has a powder-fed particle acceleration unit (26). FIG. 5 illustrates an example of such a powder-fed particle acceleration unit (26), and it comprises a powder feeding unit (27), a gas feeding unit (28), a powder feed tube (29) having an inlet (291) and an outlet (292), a gas feed tube (30) having an inlet (301) and an outlet (302) and an internal diameter (d1), and a particle acceleration tube (31) having an inlet (311), an outlet (312), an internal diameter (d2), and a length (314), and a divergent nozzle (32) having an inlet (321) and an outlet (322). As shown in FIG. 5, the inlet (291) of the powder feed tube (29) is in communication with the powder feeding unit (27), the inlet (301) of the gas feed tube (30) is in communication with the gas feeding unit (28), the outlet (292) of the powder feed tube (29) and the outlet (302) of the gas feed tube (30) are connected to the inlet (311) of the particle acceleration tube (31), and the outlet (312) of the particle acceleration tube (31) is connected to the inlet (321) of the divergent nozzle (32). As discussed earlier, such a powder-fed particle acceleration unit (26) is easy to feed using typical powder feeding units (27) and using typical powders, particularly those used in thermal spray processes. Furthermore said powder-fed particle acceleration unit (26) readily provides an easily controllable pulsed stream of particles having useful properties concerning the duration of the pulse, the velocity of the particles and the angle of the particle stream.

In some embodiments, the gas feed tube (30) preferably has an internal diameter (d1) of from 0.3 to 1.2 mm, more preferably from 0.4 mm to 1.0 mm, and most preferably from 0.5 to 0.8 mm, and the particle acceleration tube (31) preferably has an internal diameter (d2) of from 1 to 4 mm, more preferably from 1.5 to 3 mm, most preferably from 1.8 to 2.4 mm, and the particle acceleration tube (31) preferably has a length (314) of from 2 to 25 cm, more preferably from 10 to 15 cm, most preferably a length (314) of about 12 cm. It will be understood that these various embodiments of preferred dimensions of the gas feed tube (30) and the particle acceleration tube (31) may be combined without limitation in specific embodiments. These preferred dimensions help ensure that a stream (6) of particles (7) having a preferred velocity may be readily prepared in the form of a pulse of preferred duration in a robust manner.

Other aspects of the present invention is the inter-related product obtainable by the process for cladding a substrate of the present invention. One preferred embodiment is a clad substrate (1') obtained by the process for cladding a substrate of the present invention.

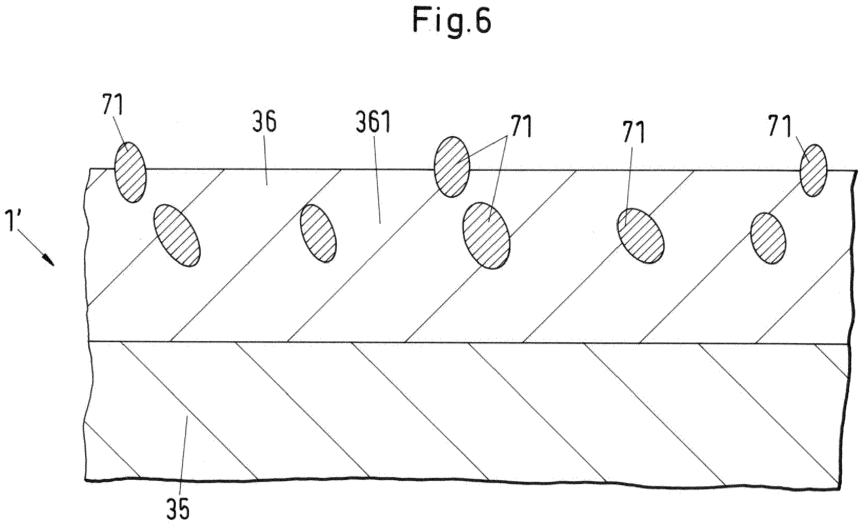

More specifically, FIG. 6 illustrates schematically an embodiment of such a clad substrate (1') obtainable by the process of the present invention. As illustrated by this embodiment, the clad substrate (1') comprises: a first metallic layer (35), and a second metallic layer (36) comprising a metallic matrix (361) and trapped particles (71) dispersed therein, wherein the trapped particles (71) are coated or uncoated particles comprising silicon carbide, cubic boron nitride, or diamond, and wherein the metallic matrix (361) is substantially free of phases of mixed compositions intermediate between the composition of the metallic matrix (361) and the composition of the trapped particles (71). In one specific embodiment, the composition of the first metallic layer (35), the second metallic layer (36), and the metallic matrix (361) are selected from the group consisting of metals, metallic alloys, and metallic superalloys. In one preferred embodiment, the composition of the first metallic layer (35) and the metallic matrix (361) of the second metallic layer (36) are substantially the same, more preferably the metallic matrix (361) is the resolidified composition of the first metallic layer (35). In a further specific preferred embodiment, the composition of the first metallic layer (35) and the metallic matrix (361) of the second metallic layer (36) are a Ni-based superalloy, most preferably IN617.

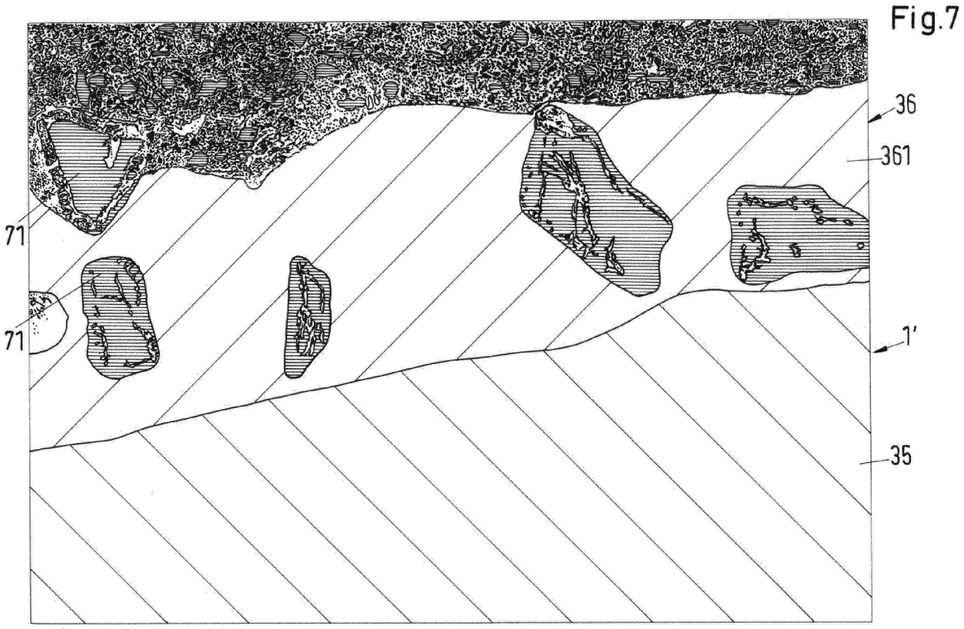

For the production of abrasive coatings, the trapped particles (71) are preferably coated or uncoated particles comprising silicon carbide, cubic boron nitride, or diamond. For the production of abrasive coatings, it is preferred to have also as many of the trapped particles (71) protruding from the surface as possible. Such trapped particles (71) protruding from the surface of the clad substrate (1') can be seen to the far left or right in FIG. 6 or to the far upper left in the photomicrograph shown in FIG. 7. In a particularly preferably embodiment, the trapped particles (71) are coated or uncoated particles of silicon carbide, cubic boron nitride, or diamond. These compositions readily provide the trapped particles (71) dispersed in the clad substrate (1') with the required abrasive and hard properties.

FIG. 7 shows an exemplary photomicrograph of a specific clad substrate (1'). It can be seen from FIG. 7 that there is no reaction zone or phases of mixed composition visible between the trapped particles (71), in this case coated silicon carbide, and their surrounding metallic matrix (361), in this case IN617, and no substantial melting or fusing together of the trapped particles (71) has taken place. As discussed earlier, such clad substrates (1') obtainable by the process of the present invention are then very different in their composition and structure from those of the prior art in which the particles are either entirely molten or at least the particles or their coatings are partially molten in the cladding process. Therefore in photomicrographs of the clad substrates of the prior art, substantial reaction zones between the particles and their surrounding matrix and/or mixed phases resulting from the melting or fusing of the matrix material with the particles or their coatings are visible.

Yet another aspect of the present invention is the use of the process or the apparatus (16) of the invention in cladding substrates. A preferred use is in the cladding of turbine components.

## Claims

1. A process for cladding a substrate (1)
comprising the steps of:
(i) directing an energy beam (2) onto an area (3) of a surface (4) of the substrate (1) to create a pool of molten material (5) at the area (3) of the surface (4),
(ii) directing a stream (6) of particles (7) toward the pool of molten material (5) so that at least a first portion of the particles (7) enters the pool of molten material (5),
(iii) allowing the pool of molten material (5) to cool and solidify thus trapping a second portion of the particles (7) in the solidified pool of material (8) to form trapped particles (71),
wherein the energy beam (2) directed at the area (3) of the surface (4) is in the form of a energy pulse, **characterized in that** the stream (6) of particles (7) is in the form of a pulse of particles (7), wherein the energy pulse is ended or the energy beam (2) is redirected or the energy beam (2) is reduced in power before the particles (7) enter the path of the energy beam (2) and before the particles (7) enter the pool of molten material (5), and wherein the ending of the energy pulse or the redirection of the energy beam (2) or the reduction in power of the energy beam (2) is embodied such that a substantial melting, fusing together or change in shape of the particles (7) by the energy beam (2) is avoided.

2. The process of claim 1, wherein after the steps (i) to (iii) have been completed on the area (3), the energy beam (2) is directed onto a substantially different area of the surface (4) and the steps (i) to (iii) are repeated on the substantially different area.

3. The process of either of claim 1 or 2, wherein after the trapped particles (71) are formed, the surface (4) of the substrate (5) is cleaned to remove a third portion of untrapped particles (72) on the surface.

4. The process of claim 3, wherein the removed third portion of untrapped particles (72) are used to prepare a further pulse of particles (7).

5. The process of any one of claims 1 to 4, wherein the pulse of particles (7) is set to a duration of from 1 to 100 ms, preferably from 5 to 50 ms, most preferably from 20 to 30 ms.

6. The process of any one of claims 1 to 5, wherein the stream (6) of particles (7) is set to a velocity of from 5 to 50 m/s, preferably from 10 to 30 m/s, and most preferably about 20 m/s.

7. The process of any one of claims 1 to 6, wherein the stream (6) of particles (7) is directed relative to the plane (15) of the area (3) of the surface (4) at an angle (14) of from 30 to 60 degrees, preferably 40 to 50 degrees.

8. The process of any one of claims 1 to 7, wherein the particles (7) are coated or uncoated particles comprising silicon carbide, cubic boron nitride, or diamond.

9. The process of any one of claims 1 to 8, wherein the energy beam (2) is a laser beam, electron beam, plasma stream, or electric arc.

## Patentansprüche

1. Verfahren zum Beschichten eines Substrats (1), umfassend die Schritte von:
(i) Richten eines Energiestrahls (2) auf einen Bereich (3) einer Oberfläche (4) des Substrats (1), um einen Pool aus geschmolzenem Material (5) in dem Bereich (3) der Oberfläche (4) zu erzeugen,
(ii) Richten eines Stroms (6) von Partikeln (7) in Richtung des Pools aus geschmolzenem Material (5), so dass mindestens ein erster Teil der Partikel (7) in den Pool aus geschmolzenem Material (5) gelangt,
(iii) den Pool aus geschmolzenem Material (5) abkühlen und verfestigen lassen, wodurch ein zweiter Teil der Partikel (7) in dem verfestigten Pool aus Material (8) eingeschlossen wird, um Partikeleinschlüsse (71) zu bilden,
wobei der auf den Bereich (3) der Oberfläche (4) gerichtete Energiestrahl (2) in Form eines Energieimpulses vorliegt, der Strom (6) von Partikeln (7) in Form eines Impulses von Partikeln (7) vorliegt, **dadurch gekennzeichnet, dass** der Energieimpuls beendet wird oder der Energiestrahl (2) umgelenkt wird oder der Energiestrahl (2) in seiner Leistung reduziert wird, bevor die Partikel (7) in die Bahn des Energiestrahls (2) gelangen und bevor die Partikel (7) in den Pool aus geschmolzenem Material (5) gelangen, und wobei das Beenden des Energieimpulses oder die Umlenkung des Energiestrahls (2) oder die Reduzierung der Leistung des Energiestrahls (2) so ausgeführt ist, dass ein wesentliches Schmelzen, Verschmelzen oder Formverändern der Partikel (7) durch den Energiestrahl (2) vermieden wird.

2. Das Verfahren nach Anspruch 1, wobei nach Beendigen der Schritte (i) bis (iii) auf dem Bereich (3), der Energiestrahl (2) auf einen im Wesentlichen unterschiedlichen Bereich der Oberfläche (4) gerichtet wird und die Schritte (i) bis (iii) auf dem im Wesentlichen unterschiedlichen Bereich wiederholt werden.

3. Das Verfahren nach einem der Ansprüche 1 oder 2, wobei nach der Bildung von Partikeleinschlüssen (71) die Oberfläche (4) des Substrats (5) gereinigt wird, um einen dritten Teil von nicht eingeschlossenen Partikeln (72) auf der Oberfläche zu entfernen.

4. Das Verfahren nach Anspruch 3, wobei der entfernte dritte Teil von nicht eingeschlossenen Partikeln (72) verwendet wird, um einen weiteren Impuls von Partikeln (7) vorzubereiten.

5. Das Verfahren nach einem der Ansprüche 1 bis 4, wobei der Impuls von Partikeln (7) auf eine Dauer von 1 bis 100 ms, vorzugsweise 5 bis 50 ms, am bevorzugtesten 20 bis 30 ms eingestellt ist.

6. Das Verfahren nach einem der Ansprüche 1 bis 5, wobei der Strom (6) von Partikeln (7) auf eine Geschwindigkeit von 5 bis 50 m/s, vorzugsweise 10 bis 30 m/s, und am bevorzugtesten etwa 20 m/s eingestellt ist.

7. Das Verfahren nach einem der Ansprüche 1 bis 6, wobei der Strom (6) von Partikeln (7) in Bezug auf die Ebene (15) des Bereichs (3) der Oberfläche (4) in einem Winkel (14) von 30 bis 60 Grad, vorzugsweise 40 bis 50 Grad, gerichtet ist.

8. Das Verfahren nach einem der Ansprüche 1 bis 7, wobei die Partikel (7) beschichtete oder unbeschichtete Partikel sind, die Siliziumkarbid, kubisches Bornitrid oder Diamant umfassen.

9. Das Verfahren nach einem der Ansprüche 1 bis 8, wobei der Energiestrahl (2) ein Laserstrahl, Elektronenstrahl, Plasmastrahl oder Lichtbogen ist.

## Revendications

1. Un procédé pour revêtir un substrat (1) comprenant les étapes consistant à:
(i) diriger un faisceau d'énergie (2) sur une région (3) d'une surface (4) du substrat (1) pour générer un bain de matière fondue (5) dans la région (3) de la surface (4),
(ii) diriger un courant (6) de particules (7) vers le bain de matière fondue (5) de sorte qu'au moins une première partie des particules (7) entrent dans le bain de matière fondue (5),
(iii) laisser refroidir et solidifier le bain de matière fondue (5), une deuxième partie des particules (7) dans le bain de matière solidifiée (8) étant indurée pour former des inclusions de particules (71),
dans lequel le faisceau d'énergie (2) dirigé sur la région (3) de la surface (4) est présent sous la forme d'une impulsion d'énergie, le courant (6) de particules (7) est présent sous la forme d'une impulsion de particules (7), **caractérisé en ce que** l'impulsion d'énergie est terminée ou le faisceau d'énergie (2) est redirigé ou la puissance du faisceau d'énergie (2) est réduite avant que les particules (7) entrent dans le trajet du faisceau d'énergie (2) et avant que les particules (7) entrent dans le bain de matière fondue (5), et dans lequel la terminaison de l'impulsion d'énergie ou la redirection du faisceau d'énergie (2) ou la réduction de la puissance du faisceau d'énergie (2) est réalisée de telle sorte qu'une fusion substantielle, une fusion ou un changement de forme des particules (7) par le faisceau d'énergie (2) est évité.

2. Le procédé selon la revendication 1, dans lequel, après avoir terminé les étapes (i) à (iii) sur la région (3), le faisceau d'énergie (2) est dirigé vers une région sensiblement différente de la surface (4), et les étapes (i) à (iii) sont répétées sur la région sensiblement différente.

3. Le procédé selon l'une des revendications 1 ou 2, dans lequel, après la formation d'inclusions de particules (71), la surface (4) du substrat (5) est nettoyée pour éliminer une troisième partie des particules non incluses (72) sur la surface.

4. Le procédé selon la revendication 3, dans lequel la troisième partie éliminée de particules non incluses (72) est utilisée pour préparer une impulsion supplémentaire de particules (7).

5. Le procédé selon l'une des revendications 1 à 4, dans lequel l'impulsion des particules (7) est réglée sur une durée de 1 à 100 ms, de préférence de 5 à 50 ms, particulièrement préféré de 20 à 30 ms.

6. Le procédé selon l'une des revendications 1 à 5, dans lequel le courant (6) de particules (7) est réglé à une vitesse de 5 à 50 m/s, de préférence de 10 à 30 m/s, et particulièrement préféré d'environ 20 m/s.

7. Le procédé selon l'une des revendications 1 à 6, dans lequel le courant (6) de particules (7) est dirigé par rapport au plan (15) de la région (3) de la surface (4) selon un angle (14) de 30 à 60 degrés, de préférence 40 à 50 degrés.

8. Le procédé selon l'une des revendications 1 à 7, dans lequel les particules (7) sont des particules revêtues ou non revêtues comprenant du carbure de silicium, du nitrure de bore cubique ou du diamant.

9. Le procédé selon l'une des revendications 1 à 8, dans lequel le faisceau d'énergie (2) est un faisceau laser, un faisceau d'électrons, un faisceau de plasma ou un arc.
